# EUROPÄISCHE PATENTANMELDUNG

(11) **EP 3 305 269 A1**
(43) Veröffentlichungstag der Anmeldung: **11.04.2018**
(21) Anmeldenummer: 17193225.4
(22) Anmeldetag: 26.09.2017
(51) Int. Cl.: A61J 1/14, B29C 65/00

(54) **INJEKTIONS-PORT**

(30) Priorität: 05.10.2016 DE 102016118908
(71) Anmelder: Muth, Christina, 32339 Espelkamp (DE)
(72) Erfinder: Muth, Christina, 32339 Espelkamp (DE)
(74) Vertreter: Wischmeyer, André

(57) **Zusammenfassung**

Die vorliegende Erfindung bezieht sich auf einen Injektions-Port (2) für einen aus zwei einen Innenraum begrenzenden Folienlagen hergestellten Folienbeutel (40) für medizinische Zwecke mit einem mit den Folienlagen verschweißbaren, innen hohl ausgebildeten Schaftabschnitt (4) und einem Verschluss (6) aus einem elastomeren Material, wobei der beutelseitige Schaftabschnitt (4) und ein am Injektionsende ausgebildeter Aufnahmeraum (8) zur Aufnahme eines Verschlusses (6) als ein einstückiges Kunststoff-Spritzgussteil ausgebildet ist.

Um einen gattungsgemäßen Injektions-Port mit einem einfacher herstellbaren dichtenden Verschluss zu versehen, wird vorgeschlagen, dass das Injektionsende einen Aufnahmeraum (8) ausbildet, in den der Verschluss (6) in dichtender Passung eingesetzt ist, die Seitenwand des Aufnahmeraums (8) an ihrem dem Schaftabschnitt (4) abgewandten Ende einen nach innen gerichteten Vorsprung (10) aufweist, der eine Injektionsöffnung (12) frei lässt, gegen den der Verschluss (6) aber in seiner Dichtlage teilweise formschlüssig abgestützt ist, und der Verschluss (6) bereits vor dem Verschweißen des Injektions-Ports (2) mit den Folienlagen in seiner Dichtlage im Aufnahmeraum (8) positioniert ist.

## Beschreibung

Die vorliegende Erfindung bezieht sich auf einen Injektions-Port für einen aus zwei einen Innenraum begrenzenden Folienlagen hergestellten Folienbeutel für medizinische Zwecke mit einem mit den Folienlagen verschweißbaren, innen hohl ausgebildeten Schaftabschnitt und einem Verschluss aus einem elastomeren Material, wobei der beutelseitige Schaftabschnitt und ein am Injektionsende ausgebildeter Aufnahmeraum zur Aufnahme eines Verschlusses als ein einstückiges Kunststoff-Spritzgussteil ausgebildet ist.

Ein gattungsgemäßer Injektions-Port ist aus der Schrift WO 2014/154195 bekannt. Der dort offenbarte Injektions-Port besteht aus einem Röhrchen, das mit einem Twist-Off-Injektionsstopfen versehen ist. Ein Stopfenteil ist dabei in einer engen Klemmpassung in das Röhrchen eingesetzt. In diesen Stopfenteil ist ein Verschluss aus einem elastomeren Material eingesetzt. Die dichtende Passung dieses Verschlusses soll sich aus einer Klemmpassung oder der Verwendung eines Dichtklebers ergeben. Eine entsprechend dichtende Klemmpassung ist mit einem elastomeren Material allerdings nur sehr schwer herstellbar, und die Montage des Verschlusses unter Verwendung eines gesonderten Klebers ist sehr aufwendig.

Es ist die Aufgabe der vorliegenden Erfindung, den gattungsgemäßen Injektions-Port mit einem einfacher herstellbaren dichtenden Verschluss zu versehen.

Die Aufgabe wird für einen gattungsgemäßen Injektions-Port gelöst indem das Injektionsende einen Aufnahmeraum ausbildet, in den der Verschluss in dichtender Passung eingesetzt ist, die Seitenwand des Aufnahmeraums an ihrem dem Schaftabschnitt abgewandten Ende einen nach innen gerichteten Vorsprung aufweist, der eine Injektionsöffnung frei lässt, gegen den der Verschluss aber in seiner Dichtlage teilweise formschlüssig abgestützt ist, und der Verschluss bereits vor dem Verschweißen des Injektions-Ports mit den Folienlagen in seiner Dichtlage im Aufnahmeraum positioniert ist.

Durch den Vorsprung wird der Verschluss in seiner Dichtlage gehalten. Der Vorsprung ist bei einem kreisrunden Querschnitt des Aufnahmeraums ebenfalls bevorzugt kreisrund ausgebildet. Der Vorsprung ist so bemessen, dass sich einerseits eine gute Abstützwirkung für den Verschluss ergibt, andererseits aber auch noch eine ausreichend große Injektionsöffnung ergibt, um mit einer Injektionsnadel durch das elastomere Material des Verschlusses hindurch stechen zu können, um damit beispielsweise ein Medikament oder einen sonstigen Zusatz in den Beutelinhalt einspritzen zu können. Je nach Montagemethode des Verschlusses muss die Injektionsöffnung auch noch so groß sein, dass der Verschluss in komprimierter Form durch die Injektionsöffnung in den Aufnahmeraum hineingepresst werden kann. Das elastomere Material aus einem Kunststoff ist einerseits leicht mit einer Spritzennadel zu durchstechen, es weist aber auch durch seine Elastizität die Fähigkeit auf, den von der Spritzennadel in das elastomere Material eingestochenen Einstichkanal nach dem Herausziehen der Spritzennadel durch ein Ausdehnen des benachbart zum Einstichkanal befindlichen elastomeren Materials sofort wieder dichtend zu verschließen.

Da der Injektions-Port nur noch aus zwei Teilen besteht, nämlich dem einstückigen Kunststoff-Spritzgussteil und dem Verschluss, sind die Herstellungskosten minimiert. Es sind keine besonderen zusätzlichen Montagearbeiten für das Zusammenfügen von Teilen mehr erforderlich. Klebearbeiten mit Trocknungsstrecken und -zeiten können entfallen.

Der Injektions-Port ist fertig vormontiert, um mit den Folien zur Herstellung eines Folienbeutels verschweißt zu werden. Dazu wird der Schaftabschnitt mit seinem beutelseitigen Ende mit den Rändern der Folienlagen verschweißt. Der Aufnahmeraum mit seinem Verschluss befindet sich dann am dem Folienbeutel abgewandten Ende des Injektions-Ports und ist für Injektionen gut zugänglich. Der Injektions-Port kann in einer automatisierten Produktionsanlage zur Herstellung der Folienbeutel gut und kostengünstig von den maschinellen Förderanlagen befördert und in der Position positioniert werden, in der die Verschweißung mit den Folienlagen erfolgt. Das gilt insbesondere, wenn der Schaftabschnitt im Verbindungsbereich mit den Folienlagen einen kreisförmigen Querschnitt aufweist.

Nach einer Ausgestaltung der Erfindung ist das elastomere Material des Verschlusses vom Schaftabschnitt durch eine Trennmembran abgetrennt. Durch die Trennmembran kommt der Beutelinhalt nicht mit dem Material des elastomeren Materials in Kontakt. Dadurch kann ein kostengünstigeres elastomeres Material eingesetzt werden, das ohne eine Trennmembran bei einem entsprechenden Beutelinhalt nicht verwendet werden dürfte. Die Diffusion von beispielsweise Lösungsmitteln, die in dem elastomeren Material enthalten sind, kann durch die Trennmembran vermieden werden. Für den Einsatz einer Trennmembran muss abgewogen werden, ob die zusätzlichen Kosten für die Herstellung der Trennmembran die Kosteneinsparung durch das dann mögliche elastomere Material aufwiegen.

Nach einer Ausgestaltung der Erfindung weist das den Verschluss aufnehmende Injektionsende einen größeren Durchmesser auf als der Schaftabschnitt, wobei der Verschluss bereichsweise auf die im Injektionsende mündenden Seitenwände des Schaftabschnitts abgestützt ist. Die die im Injektionsende mündenden Seitenwände des Schaftabschnitts bilden auf diese Weise eine Ringfläche, gegen die der Verschluss beutelseitig abgestützt ist und dadurch auch in Richtung des Folienbeutels einen festen Sitz im Port hat. Das Injektionsende ist aufgrund seines größeren Durchmessers gut fassbar, der Aufnahmeraum zur Aufnahme des Verschlusses ist dadurch groß bemessen, der Verschluss hat dadurch ein ausreichendes Volumen, um genügend Rückstellkräfte zur Abdichtung des Einstichkanals aufzubauen, nachdem eine in den Verschluss eingestochene Injektionsnadel wieder aus dem elastomeren Material herausgezogen worden ist, und die Injektionsnadel kann leicht in den Verschluss eingestochen werden. Durch den Versatz des Durchmessers vom Schaftabschnitt zum Aufnahmeraum am Injektionsende wird das einstückige Bauteil des Injektions-Ports durch die umlaufende Wandung, die die Ringfläche bildet, statisch stabiler als ein Röhrchen mit einem gleich bleibenden Durchmesser. Das gilt insbesondere im Zusammenwirken mit dem Vorsprung, durch den der Aufnahmeraum endseitig begrenzt wird.

Nach einer Ausgestaltung der Erfindung weist eine Seitenwand des Schaftabschnitts eine Dicke von 20 - 40 % des Innendurchmessers des im Schaftabschnitt befindlichen Hohlraums auf. Bei einem Innendurchmesser des röhrchenförmigen Schaftabschnitts von beispielsweise 5 mm, der für Injektionszwecke ausreichen würde, könnten Wandstärken von 1 - 2 mm für die Seitenwand verwendet werden. Bei einem Innendurchmesser des Schaftabschnitts von 4 mm reichen Wandstärken von 0,8 bis 1,6 mm, und bei 3 mm genügen Wandstärken von 0,6 - 1,2 mm. Auch eine Wandstärke von 3 mm reicht noch aus, um Flüssigkeiten durch den Schaftabschnitt in den Innenraum des Folienbeutels spritzen zu können. Derartige Wandstärken sind ausreichend dick, um noch mit den Folienlagen verschweißt werden zu können. Die vergleichsweise geringen Durchmesser des Schaftabschnitts erleichtern das Verschweißen mit den Folienlagen, weil die Folienlagen im Einschweißbereich nicht so weit ausgebeult und beim Verschweißen gedehnt werden. Es ergibt sich also eine hohe Prozesssicherheit und Dichtigkeit beim Verschweißen der Injektions-Ports, auch wenn im Bereich des Schaftabschnitts keine sonst üblichen Dorne oder Schiffchen zur Abstützung und Folienführung verwendet sind. Dadurch kann zusätzlich Kunststoffmaterial eingespart werden.

Nach einer Ausgestaltung der Erfindung ist der Innendurchmesser des im Schaftabschnitt ausgebildeten Hohlraums kleiner als 5 mm. Die Vorteile sind bereits vorstehend beschrieben.

Nach einer Ausgestaltung der Erfindung ist das elastomere Material des Verschlusses als Formteil in das Injektionsende eingesetzt. Der Verschluss kann beispielsweise maschinell in den Aufnahmeraum eingepresst werden. Das elastomere Material des Verschlusses erlaubt eine Komprimierung, um den Verschluss durch die Injektionsöffnung in den Aufnahmeraum drücken zu können, wonach er diesen nahezu oder vollständig ausfüllt.

Nach einer Ausgestaltung der Erfindung ist das elastomere Material des Verschlusses als Zweikomponenten-Spritzguss in das Injektionsende eingespritzt. Während das Material des einstückigen Injektions-Ports aus einem härteren Kunststoff als erster Komponente besteht, kann der Verschluss aus einem weicheren Kunststoffmaterial als zweiter Komponente hergestellt werden.

Nach einer Ausgestaltung der Erfindung weist der Schaftabschnitt einen runden Außenumfang mit einer glatten rillenfreien Oberfläche auf. Der runde Außenumfang macht es entbehrlich, den Injektions-Port vor dem Verschweißen noch in eine besondere Lage drehen zu müssen, um ihn verschweißen zu können. Die rillenfreie Oberfläche ist materialsparend und kostengünstig herstellbar, gleichwohl gut verschweißbar. Es kann aus dem Herstellungswerkzeug leicht entnommen und entformt werden.

Nach einer Ausgestaltung der Erfindung weist der Schaftabschnitt an seinem beutelseitigen Ende eine Ausnehmung in der Schaftwand auf. Eine solche Ausnehmung ist insbesondere dann vorteilhaft, wenn der Schaftabschnitt des Infusions-Ports so mit dem Folienmaterial des Folienbeutels verschweißt wird, dass er an seinem beutelseitigen Ende mit dem Ende des Schaftabschnitts über die Verschweißungszone mit dem Folienmaterial des Folienbeutels hinaus in den Innenraum des Folienbeutels hineinragt, ohne dass dieser überstehende Abschnitt mit dem Folienmaterial des Folienbeutels verschweißt ist. Die Schweißlinie ist dadurch weiter von der beim Schweißvorgang ungestützten Folie entfernt, und das Schweißwerkzeug kann zweidimensional bleiben. Bei einer solchen Positionierung des Infusions-Ports im Folienbeutel könnte die in den Folienbeutel eingefüllte Flüssigkeit bei einer Aufhängung des Folienbeutels für eine Infusion mit nach unten hängenden Ports ohne eine Ausnehmung nicht mehr vollständig auslaufen, weil das Ende des Schaftabschnitts über die am weitesten nach innen reichende Versiegelungszone der Folienlagen mit dem Schaftabschnitt des Infusions-Ports um ein Maß übersteht. Hat der Pegelstand der im Folienbeutel befindlichen Flüssigkeit die Oberkante des in den Beutel ragenden Endes des Schaftabschnitts erreicht, kann die Restflüssigkeit nicht mehr über den Port ablaufen, und dieser Flüssigkeitsrest müsste ungenutzt im Beutel verbleiben, da er nicht mehr ablaufen kann. Wenn die Ausnehmung so groß ist, dass die im Beutel befindliche Flüssigkeit durch die Ausnehmung hindurch in den Innenraum des Schaftabschnitts gelangen kann, so kann sich der aufgehängte Folienbeutel zumindest bis zur unteren Kante der Ausnehmung entleeren.

Für eine vollständige Entleerbarkeit des Folienbeutels ist es vorteilhaft, die Ausnehmung so weit vom in den Beutel ragenden Ende des Schaftabschnitts entfernt zu positionieren oder die Ausnehmung so lang auszugestalten, dass sie bis an die am weitesten nach innen reichende Versiegelungszone der Folienlagen mit dem Schaftabschnitt des Infusions-Ports heranreicht. Die Ausnehmung kann beispielsweise als ein länglicher oder spiralförmig verlaufender Schlitz ausgebildet sein, oder die Ausnehmung ist als kreisrunde, ovale oder mehreckige Öffnung ausgebildet. Damit der Schaftabschnitt bis in den Innenraum des Folienbeutels hineinragen kann, ist es vorteilhaft, den Schaftabschnitt gegenüber einer Version, die nur bis in den Bereich der Versiegelung mit den Folienlagen reicht, zu verlängern. Der bis in den Innenraum des Folienbeutels reichende Schaftabschnitt ist für die Versiegelung des Infusions-Ports mit den Folienlagen des Folienbeutels vorteilhaft. Die mit dem Schaftabschnitt versiegelten Folien liegen beim Versiegelungsvorgang in der Versiegelungszone flächig an der Außenfläche des Schaftabschnitts an. Auch die an die Siegelflächen angrenzenden Bereiche der Folienlagen sind im Bereich des in den Innenraum des Folienbeutels hinein ragenden Schaftabschnitts noch gegen die anliegenden Werkzeugflächen abgestützt, so dass sich die Folienlagen in dem vom Innenraum des Folienbeutels zu den Siegelflächen angrenzenden Bereich nicht während des Siegelvorgangs dreidimensional falten und verziehen können, sondern plan auf dem Außenumfang des in den Innenraum des Folienbeutels reichenden Schaftabschnitt anliegen. Um eine bessere Abstützung der zur Siegelfläche benachbarten Folie zu erhalten, kann beispielsweise ein Überstand des Schaftabschnitts von nur 5 mm ausreichen, um die Siegelqualität erheblich zu verbessern. Durch die glattere Anlage des Folienmaterials an die Außenflächen des Schaftabschnitts auch im Umgebungsbereich der Siegelzone während des Siegelvorgangs ergibt sich eine höhere Qualität der Versiegelung mit einer geringeren Ausschussquote und einer besseren Haltbarkeit der Folienbeutel. Der länger ausgebildete Schaftabschnitt verhindert auch, dass in den Port eingestochene Spritzennadeln mit der Spitze versehentlich die Seitenwände des Folienbeutels aufstechen, da die Spritzennadel im länger ausgebildeten Schaftabschnitt besser geführt ist.

Nach einer Ausgestaltung der Erfindung ist der vorstehend beschriebene Injektions-Port in einem Folienbeutel verwendet. Daraus ergeben sich die vorstehend beschriebenen Vorteile.

Nach einer Ausgestaltung der Erfindung ist in dem Folienbeutel ein zusätzlicher Spike-Port vorhanden, wobei an dem Verschlussende des hohl ausgebildeten Schaftabschnitts des Spike-Ports eine Flanschfläche ausgebildet ist, über die der Schaftabschnitt mit einer aufgesetzten Kappe durch eine Schweißverbindung verbunden ist. Zusätzlich zum Verschweißen kann die Verbindung zusätzlich noch mechanisch, beispielsweise durch Verschrauben oder Rasten, verstärkt sein. Bei einem kombinierten mechanischen und verschweißten Verschluss ergibt sich eine größere Dichtsicherheit.

Die erfindungsgemäße Schweißverbindung stellt eine zusätzliche Sicherung des Verschlusses dar. Der Spike-Port ist nach der Befüllung des Beutels also nicht mehr nur durch den Verschluss abgedichtet, sondern zusätzlich auch noch durch die Verschweißung der Kappe mit der Flanschfläche. Die Verschweißung bildet eine gegenüber nur mechanischen Verbindungen besonders flüssigkeits- und luftdichte Versiegelung des Beutelinhalts. Die Schweißverbindung ist zudem ein Originalitätsverschluss, der nicht zerstörungsfrei geöffnet werden kann.

Während der Injektions-Port also mit einem verschlossenen Ende mit den Folienlagen verschweißt wird, kann der Spike-Port zur Herstellung eines Folienbeutels zunächst mit einem offenen Ende mit den Folienlagen verschweißt werden, um den Folienbeutel danach noch durch ihn zu befüllen und erst dann zu verschließen. Der erfindungsgemäß ausgestattete Injektions-Port und der Spike-Port bilden auf diese Weise ein Port-System, mit dem eine kostengünstige Beutelherstellung, eine leichte und schnelle Befüllung durch den Spike-Port, ein sicherer Verschluss und eine einfache Injektion von Flüssigkeiten in den Folienbeutel durch den Injektions-Port möglich ist.

Nach einer Ausgestaltung der Erfindung weist der Spike-Port in seinem Schaftabschnitt einen größeren Innendurchmesser auf als der Injektions-Port. Der Spike-Port dient nicht nur zur Entnahme der Beutelflüssigkeit, auch die Befüllung des Folienbeutels kann ausschließlich über den Spike-Port erfolgen. Bei einem ausreichend großen Innendurchmesser des Spike-Ports von mehr als 5 mm ergeben sich immer noch ausreichend kurze Befüllzeiten für den Folienbeutel. Der Injektions-Port kann dadurch unberührt verschlossen bleiben und mit einem sehr geringen Durchmesser ausgebildet sein.

Nach einer Ausgestaltung der Erfindung ragt der Injektions-Port an seinem beutelseitigen Ende mit dem Ende des Schaftabschnitts über die Verschweißungszone mit dem Folienmaterial des Folienbeutels hinaus in den Innenraum des Folienbeutels hinein. Wie vorstehend bereits erläutert ergibt sich dadurch eine glattere Anlage der Folien an den Schaftabschnitt des Injektions-Ports im Bereich der Siegelzone und den dazu benachbarten Bereichen. Der durch den Überstand des Schaftabschnitts im Innenraum des Folienbeutels verschlechterten Entleerung des Inhalts kann durch die vorstehend beschriebene Ausnehmung in der Seitenwand des Schaftabschnitts abgeholfen werden.

Nach einer Ausgestaltung der Erfindung ist der Injektions-Port aus einem formstabilen Kunststoff hergestellt. Mit dem formstabilen Kunststoff ist ein Kunststoff gemeint, der beim Verschweißen seine Form beibehält, ohne dazu von einer Mandrene abgestützt werden zu müssen. Nicht formstabile Schläuche, wie sie aus dem Stand der Technik bekannt sind, sind vom Schweißwerkzeug und auch von Hand leicht verformbar. Durch den Wegfall der Mandrene ist die Fertigung vereinfacht. Als Kunststoff kann beispielsweise ein Polypropylen verwendet werden, der nicht durch Weichmacher in seiner Formstabilität geschwächt ist. Ohne den Weichmacher ist der Kunststoff kostengünstiger. Um eine ausreichende Formstabilität zu erreichen, sind Wandstärken von beispielsweise mehr als 0,4 mm sinnvoll.

Nach einer Ausgestaltung der Erfindung weist der Folienbeutel einen Injektions-Port auf, der an seinem beutelseitigen Ende mit dem Ende des Schaftabschnitts über die Verschweißungszone mit dem Folienmaterial des Folienbeutels hinaus in den Innenraum des Folienbeutels hineinragt. Der Folienbeutel kann zusätzlich zum Injektions-Port noch einen entsprechend ausgestalteten Spike-Port aufweisen, um auch für diesen eine verbesserte Qualität der Siegelverbindung zu erreichen.

Nach einer Ausgestaltung der Erfindung weist der Folienbeutel als weiteren Anschluss einen mit der Folie verschweißten Schlauch auf, dessen nach außen weisendes Ende nachträglich mit einem herkömmlichen Stopfen verschließbar ist. Über den erst nachträglich verschließbaren Schlauch kann der Folienbeutel beispielsweise noch nach dessen vollständiger Herstellung befüllt werden. Der nachträglich verschließbare Schlauch ermöglicht es, je nach Kundenwunsch beliebige Stopfen auf den Schlauch aufzusetzen. Das ist bei dem vorgefertigt verschlossenen Injektions-Port so nicht möglich. Der verschließbare Schlauch kann aus einem weichen Kunststoff hergestellt sein, der dann allerdings beim Verschweißen mit einer Mandrene abgestützt werden muss, damit er beim Schweißvorgang nicht seine Form verändert.

Es wird ausdrücklich darauf hingewiesen, dass die vorstehend beschriebenen Ausgestaltungen der Erfindungen jeweils für sich, aber auch in einer beliebigen Kombination miteinander mit dem Gegenstand des Anspruchs 1 kombiniert werden können.

Weitere vorteilhafte Abwandlungen und Ausgestaltung der Erfindung lassen sich der nachfolgenden gegenständlichen Beschreibung und den Zeichnungen entnehmen.

Die Erfindung soll anhand eines Ausführungsbeispiels näher beschrieben werden. Es zeigen:
- Fig. 1:: eine Längsschnitt-Ansicht durch einen Injektions-Port,
- Fig. 2:: eine Längsschnitt-Ansicht durch einen Spike-Port,
- Fig. 3:: eine vergrößerte Ansicht des Anbindungsbereichs der in Fig. 2 gezeigten Kappe,
- Fig. 4:: eine Ansicht auf einen Spike-Port mit einer alternativen Kappen-form,
- Fig. 5:: eine vergrößerte Ansicht des Anbindungsbereichs der in Fig. 4 gezeigten Kappe,
- Fig. 6:: eine Ansicht auf einen Folienbeutel,
- Fig. 7:: eine Schnittansicht auf einen Injektions-Port mit verlängertem Schaftabschnitt,
- Fig. 8:: eine Schnittansicht auf einen Spike-Port mit verlängertem Schaftabschnitt,
- Fig. 9:: eine Ansicht auf einen Folienbeutel, der mit verlängerten Injektions- und Spike-Ports ausgestattet ist, und
- Fig. 10:: eine Ansicht auf einen Folienbeutel mit einem Injektions-Port und einem zusätzlichen Schlauch.

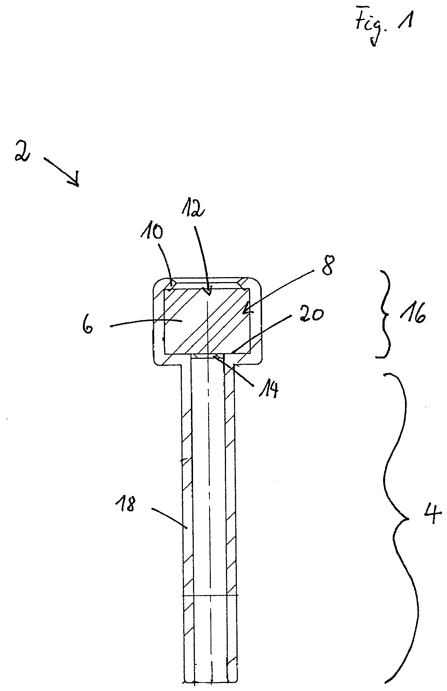

In Fig. 1 ist eine Längsschnitt-Ansicht durch einen Injektions-Port 2 gezeigt. Der Injektions-Port 2 verfügt über einen Schaftabschnitt 4, der mit den Folienlagen eines Folienbeutels verschweißt werden kann. Der Injektions-Port 2 verfügt über einen Aufnahmeraum 8, in den ein Verschluss 6 aus einem elastomeren Material eingesetzt ist. Im Ausführungsbeispiel füllt der Verschluss 6 den gesamten Aufnahmeraum 8 aus. Die seitliche Wandung des Aufnahmeraums 8 ist im Bereich der Injektionsöffnung 12 als ein Vorsprung 10 ausgebildet, der im Ausführungsbeispiel wegen des runden Aufnahmeraums als Ring ausgebildet ist. Der Vorsprung 10 steht um ein Maß über die Innenfläche der Seitenwand des Aufnahmeraums 8 vor, so dass sich eine formschlüssige Anlage des Verschlusses 6 an dem Vorsprung 10 ergibt. Der Vorsprung 10 schließt den Aufnahmeraum 8 allerdings nicht an dem dem Folienbeutel abgewandten Ende ab, sondern lässt noch einen ausreichenden Freiraum für die Injektionsöffnung 12.

Im Ausführungsbeispiel ist zwischen dem Verschluss 6 und dem hohlen Innenraum des Schaftabschnitts 4 noch eine Trennmembran 14 eingefügt. Wenn ein mit dem Injektions-Port 2 ausgestatteter Folienbeutel mit einer Flüssigkeit befüllt ist, verhindert die Trennmembran 14, dass die Flüssigkeit mit dem elastomeren Material des Verschlusses 6 in Kontakt geraten kann.

Der Aufnahmeraum 8 mit dem daran befindlichen Beschluss und der Injektionsöffnung 12 bildet das Injektionsende 16 des Injektions-Ports 2. Mit dem dem Folienbeutel zugewandten Ende des Schaftabschnitts 4 kann der Injektions-Port 2 mit den Folienlagen eines Folienbeutels verschweißt werden.

Wie aus der Fig. 1 ersichtlich ist, beträgt die Dicke der Seitenwand 18 etwa 20 bis 40 % des Innendurchmessers des im Schaftabschnitt 4 befindlichen Hohlraums.

Die Seitenwand 18 des Schaftabschnitts 4 ist an seinem dem Injektionsende 16 zugewandten Ende nach außen geführt, um einen Übergang zu dem vergrößerten Durchmesser des Aufnahmeraums 8 zu schaffen. Im Übergangsbereich bildet die Seitenwand 18 eine Ringfläche 20 aus, gegen die der Verschluss 6 beutelseitig abgestützt ist. Die Trennmembran 14 befindet sich im Übergangsbereich vom Aufnahmeraum 8 zum Schaftabschnitt 4.

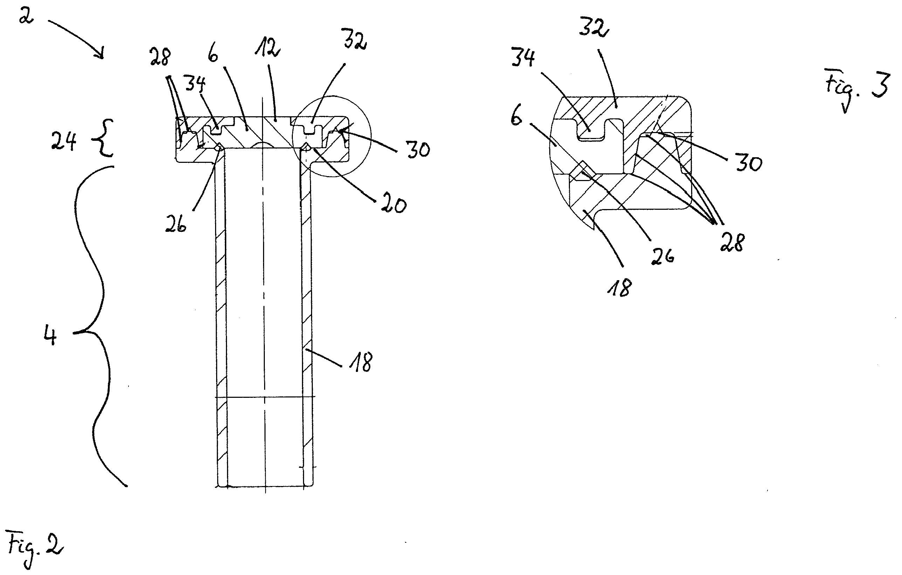

In Fig. 2 ist ein Ausführungsbeispiel eines Spike-Ports 22 gezeigt. Der Spike-Port 22 verfügt über einen beutelseitigen Schaftabschnitt 4, der mit den Folienlagen verschweißt wird. An seinem dem Beutel abgewandten Ende befindet sich ein Verschlussende 24. Auf das Verschlussende 24 wird nach dem Befüllen des Folienbeutels ein Verschluss 6 aufgesetzt, der insbesondere aus einem elastomeren Material bestehen kann. Um den Verschluss 6 ausreichend zu sichern, ist dieser im Ausführungsbeispiel mit einer Kappe 32 auf die Flanschfläche 28 gedrückt. Der Verschluss 6 hat im Ausführungsbeispiel einen größeren Durchmesser als der Innendurchmesser des Hohlraums im Schaftabschnitt 4. Im Übergangsbereich von der Seitenwand 18 zur Flanschfläche 28 befindet sich ein Auflagering 26, der in die dem Schaftabschnitt 4 zugewandte Fläche des Verschlusses 6 einsticht. Auf der Innenfläche der Kappe 32 befindet sich eine Klemmnase 34, die den Verschluss 6 von der dem Auflagering 26 gegenüberliegenden Seite komprimiert und formschlüssig hält. Über die Kombination des Auflagerings 26, der Klemmnase 34 und der entsprechenden Form des Verschlusses 6 ergibt sich bereits eine gute mechanische Sicherung des Verschlusses 6, wenn dieser von der Kappe 32 gehalten ist. Die Halterung des Verschlusses 6 befindet sich im Ausführungsbeispiel außerhalb der Fortsetzung des im Schaftabschnitt 4 ausgebildeten Hohlraums in Richtung des Verschlussendes 24.

Die Kappe 32 ist über die Flanschfläche 28 mit dem Spike-Port 22 verbunden. Im Kontaktbereich zwischen der Flanschfläche 28 und der korrespondierenden Innenfläche der Kappe 32 ist im Ausführungsbeispiel eine Schmelznase 30 ausgebildet, die bei einer Verschweißung der Kappe 32 mit der Flanschfläche 28 vorrangig schmilzt und eine Schmelzverbindung mit dem Material der Kappe 32 eingeht. Über die gesonderte Schmelzverbindung der Kappe 32 mit der Flanschfläche 28 des Spike-Ports 22 ergibt sich eine zusätzliche Sicherung und Abdichtung des Verschlusses 6.

Die Ausgestaltung der Verbindungszone zwischen der Kappe 32 und der Flanschfläche 28 ist in Fig. 3 in einer vergrößerten Ansicht dargestellt.

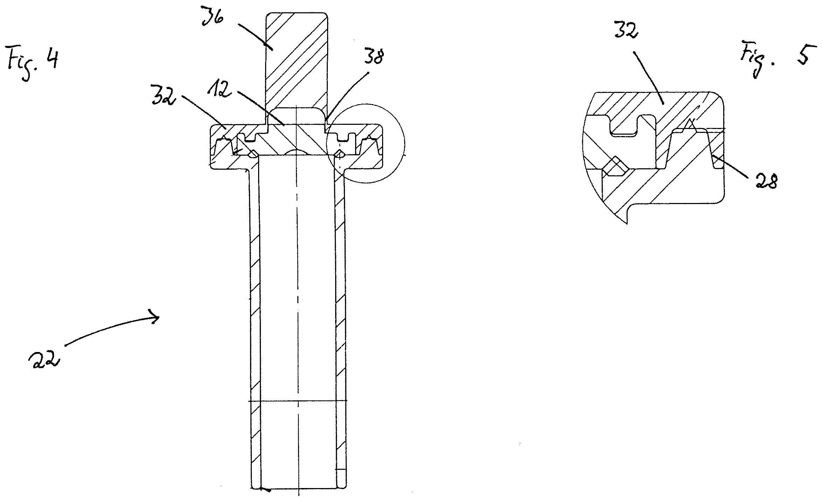

In Fig. 4 ist eine alternative Ausführungsform einer Kappe 32 gezeigt. Die Kappe 32 verfügt über einen Deckelabschnitt 36, der die Injektionsöffnung 12 als Originalitätsverschluss abdeckt. Über eine Schwächungszone 38 kann der Deckelabschnitt 36 von der übrigen Kappe 32 abgetrennt werden, wenn der entsprechende Folienbeutel in Benutzung genommen wird.

In Fig. 5 ist wieder eine vergrößerte Ausführung der Verbindungszone zwischen der Flanschfläche 28 und der Kappe 32 gezeigt. Diese kann bei der in Fig. 4 gezeigten Ausbildung der Kappe identisch erfolgen wie bei der in Fig. 2 gezeigten Ausführung der Kappe 32.

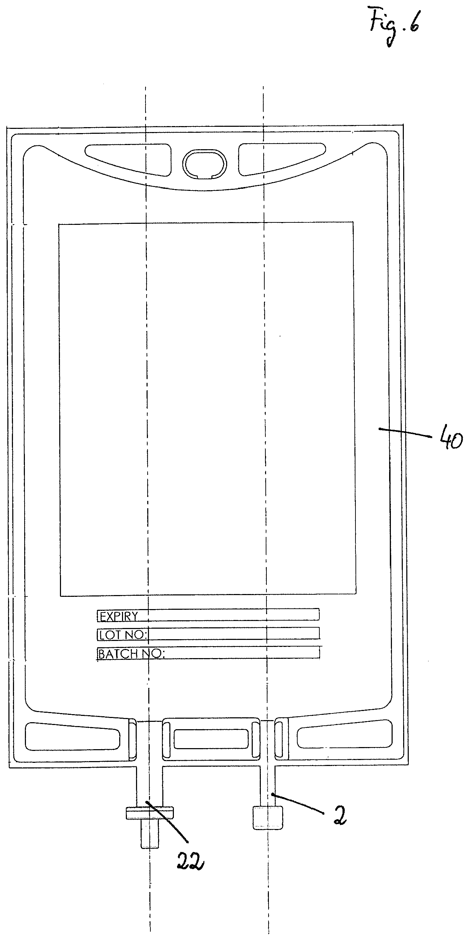

In Fig. 6 findet sich schließlich eine Ansicht auf den Folienbeutel 40, der im Ausführungsbeispiel mit einem Injektions-Port 2 und einem Spike-Port 22 versehen ist. Aus der Ansicht in Fig. 6 ist gut erkennbar, dass der Injektions-Port 2 und der Spike-Port 22 leicht in einen entsprechenden Aufbau eines Folienbeutels integriert werden können.

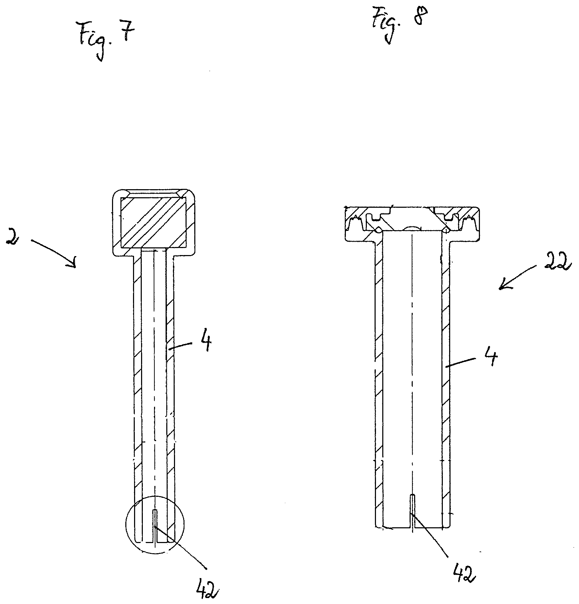

In Fig. 7 ist eine Schnittansicht auf einen Injektions-Port 2 mit verlängertem Schaftabschnitt 4 gezeigt. Am unteren Ende des Schaftabschnitts 4 ist eine schlitzförmige Ausnehmung 44 ausgebildet.

Fig. 8 zeigt eine Schnittansicht auf einen Spike-Port 22 mit verlängertem Schaftabschnitt 4. Auch dort ist am unteren Ende des Schaftabschnitts 4 eine schlitzförmige Ausnehmung 44 ausgebildet.

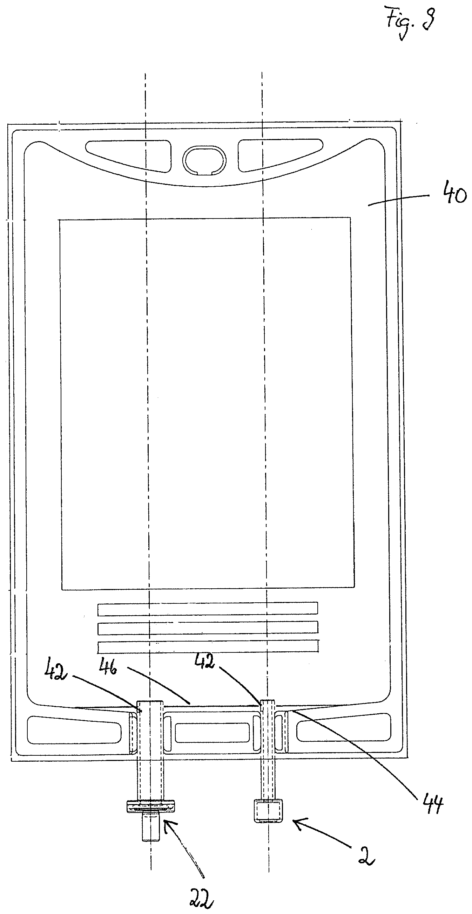

Fig. 9 zeigt eine Ansicht auf einen Folienbeutel, der mit verlängerten Injektions- und Spike-Ports 2, 22 ausgestattet ist. Die Enden der Schaftabschnitte 4 ragen in den Innenraum des Folienbeutels 40 hinein und stehen über ein Maß über die Siegelzone mit der Schweißlinie 44 über. Selbst bei dem in Fig. 9 erkennbaren Pegelstand 46 der im Folienbeutel 40 befindlichen Flüssigkeit, der unter die Oberkanten der in den Beutelinnenraum hinein ragenden Enden der Schaftabschnitte 4 gefallen ist, kann diese noch über die Ausnehmungen 42 in den Schaftabschnitten 4 des Injektions- und des Spike-Ports 2, 22 selbsttätig aus dem Folienbeutel ablaufen.

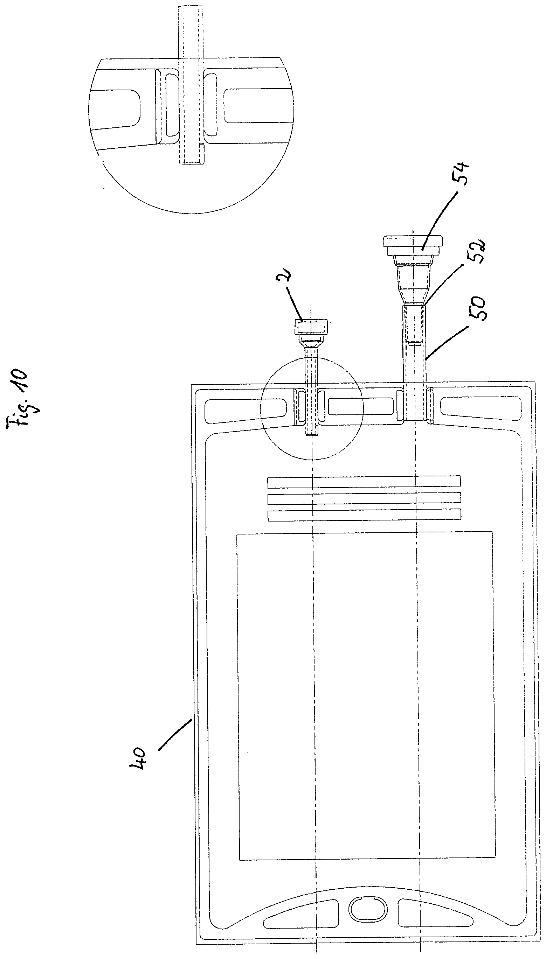

In Fig. 10 ist ein Folienbeutel 40 gezeigt, bei dem ein Injektions-Port 2 mit den Folienlagen des Folienbeutels 40 verschweißt ist. Zusätzlich zum Injektions-Port 2 ist als weiterer Anschluss ein mit der Folie verschweißter Schlauch 50 vorhanden, dessen nach außen weisendes Ende 52 mit einem herkömmlichen Stopfen 54 verschlossen ist, der nach dem Einschweißen des Schlauches 50 in den Folienbeutel 40 auf das Ende 52 aufgesetzt wurde. Der herkömmliche Stopfen 54 ist im Ausführungsbeispiel ein Spike-Stopfen.

Das vorstehend beschriebene Ausführungsbeispiel dient nur der Erläuterung der Erfindung. Die Erfindung ist nicht auf das vorstehend beschriebene Ausführungsbeispiel beschränkt. Dem Fachmann bereitet es keine Schwierigkeiten, das Ausführungsbeispiel auf eine ihm als geeignet erscheinende Weise zu verändern, um es an einen konkreten Anwendungsfall anzupassen.

## Patentansprüche

1. Injektions-Port (2) für einen aus zwei einen Innenraum begrenzenden Folienlagen hergestellten Folienbeutel (40) für medizinische Zwecke mit einem mit den Folienlagen verschweißbaren, innen hohl ausgebildeten Schaftabschnitt (4) und einem Verschluss (6) aus einem elastomeren Material, wobei der beutelseitige Schaftabschnitt (4) und ein am Injektionsende ausgebildeter Aufnahmeraum (8) zur Aufnahme eines Verschlusses (6) als ein einstückiges Kunststoff-Spritzgussteil ausgebildet ist, **dadurch gekennzeichnet, dass** das Injektionsende einen Aufnahmeraum (8) ausbildet, in den der Verschluss (6) in dichtender Passung eingesetzt ist, die Seitenwand des Aufnahmeraums (8) an ihrem dem Schaftabschnitt (4) abgewandten Ende einen nach innen gerichteten Vorsprung (10) aufweist, der eine Injektionsöffnung (12) frei lässt, gegen den der Verschluss (6) aber in seiner Dichtlage teilweise formschlüssig abgestützt ist, und der Verschluss (6) bereits vor dem Verschweißen des Injektions-Ports (2) mit den Folienlagen in seiner Dichtlage im Aufnahmeraum (8) positioniert ist.

2. Injektions-Port (2) nach Anspruch 1, **dadurch gekennzeichnet, dass** das elastomere Material des Verschlusses (6) vom Schaftabschnitt (4) durch eine Trennmembran (14) abgetrennt ist.

3. Injektions-Port (2) nach Anspruch 1 oder 2, **dadurch gekennzeichnet, dass** das den Verschluss (6) aufnehmende Injektionsende (16) einen größeren Durchmesser aufweist als der Schaftabschnitt (4), wobei der Verschluss (6) bereichsweise auf die im Injektionsende (16) mündenden Seitenwände (18) des Schaftabschnitts (4) abgestützt ist.

4. Injektions-Port (2) nach einem der vorhergehenden Ansprüche, **dadurch gekennzeichnet, dass** eine Seitenwand (18) des Schaftabschnitts (4) eine Dicke von 20 - 40 % des Innendurchmessers des im Schaftabschnitt befindlichen Hohlraums (4) aufweist.

5. Injektions-Port (2) nach einem der vorhergehenden Ansprüche, **dadurch gekennzeichnet, dass** der Innendurchmesser des im Schaftabschnitt (4) ausgebildeten Hohlraums kleiner als 5 mm ist.

6. Injektions-Port (2) nach einem der vorhergehenden Ansprüche, **dadurch gekennzeichnet, dass** das elastomere Material des Verschlusses (6) als Formteil in das Injektionsende (16) eingesetzt ist.

7. Injektions-Port (2) nach einem der vorhergehenden Ansprüche, **dadurch gekennzeichnet, dass** das elastomere Material des Verschlusses (6) als Zweikomponenten-Spritzguss in das Injektionsende (16) eingespritzt ist.

8. Injektions-Port (2) nach einem der vorhergehenden Ansprüche, **dadurch gekennzeichnet, dass** der Schaftabschnitt (4) einen runden Außenumfang mit einer glatten rillenfreien Oberfläche aufweist.

9. Injektions-Port (2) nach einem der vorhergehenden Ansprüche, **dadurch gekennzeichnet, dass** der Schaftabschnitt (4) an seinem beutelseitigen Ende eine Ausnehmung (42) in der Schaftwand aufweist.

10. Injektions-Port (2) nach einem der vorhergehenden Ansprüche, **dadurch gekennzeichnet, dass** der Injektions-Port (2) aus einem formstabilen Kunststoff hergestellt ist.

11. Folienbeutel (40) mit einem Injektions-Port (2), **dadurch gekennzeichnet, dass** der Injektions-Port (2) nach den kennzeichnenden Merkmalen eines oder mehrerer der Ansprüche 1 bis 10 gestaltet ist.

12. Folienbeutel (40) nach Anspruch 11, **dadurch gekennzeichnet, dass** in dem Folienbeutel (40) ein zusätzlicher Spike-Port (22) vorhanden ist, wobei an dem Verschlussende (24) des hohl ausgebildeten Schaftabschnitts (4) des Spike-Ports (22) eine Flanschfläche (28) ausgebildet ist, über die der Schaftabschnitt (4) mit einer aufgesetzten Kappe (32) durch eine Schweißverbindung verbunden ist.

13. Folienbeutel (40) nach Anspruch 12, **dadurch gekennzeichnet, dass** der Spike-Port (22) in seinem Schaftabschnitt (4) einen größeren Innendurchmesser aufweist als der Injektions-Port (2).

14. Folienbeutel (40) nach einem der Ansprüche 11 bis 13, **dadurch gekennzeichnet, dass** der Injektions-Port (2) an seinem beutelseitigen Ende mit dem Ende des Schaftabschnitts (4) über die Verschweißungszone mit dem Folienmaterial des Folienbeutels (40) hinaus in den Innenraum des Folienbeutels (40) hineinragt.

15. Folienbeutel (40) nach einem der Ansprüche 11 bis 14, **dadurch gekennzeichnet, dass** der Folienbeutel (40) einen Spike-Port (22) aufweist, der an seinem beutelseitigen Ende mit dem Ende des Schaftabschnitts (4) über die Verschweißungszone mit dem Folienmaterial des Folienbeutels (40) hinaus in den Innenraum des Folienbeutels (40) hineinragt.

16. Folienbeutel (40) nach einem der Ansprüche 11 bis 15, **dadurch gekennzeichnet, dass** der Folienbeutel (40) als weiteren Anschluss einen mit der Folie verschweißten Schlauch (50) aufweist, dessen nach außen weisendes Ende (52) nachträglich mit einem herkömmlichen Stopfen (54) verschließbar ist.
